(19)

Europäisches
Patentamt
European
Patent Office
Office européen
des brevets

(11) **EP 3 357 960 A1**

(12) **EUROPEAN PATENT APPLICATION**
published in accordance with Art. 153(4) EPC

(43) Date of publication:
**08.08.2018 Bulletin 2018/32**

(21) Application number: **16851871.0**

(22) Date of filing: **30.09.2016**

(51) Int Cl.:
*C08K 5/29* (2006.01)   *C08J 3/22* (2006.01)
*C08K 5/34* (2006.01)   *C08K 5/3445* (2006.01)
*C08L 67/00* (2006.01)   *C08L 77/00* (2006.01)

(86) International application number:
**PCT/JP2016/079075**

(87) International publication number:
**WO 2017/057702 (06.04.2017 Gazette 2017/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **01.10.2015 JP 2015196164**

(71) Applicant: **Nisshinbo Chemical Inc.
Tokyo 103-8650 (JP)**

(72) Inventors:
• **TAKAHASHI, Ikuo
Chiba-shi
Chiba 267-0056 (JP)**

• **YAMAZAKI, Yoshihiro
Chiba-shi
Chiba 267-0056 (JP)**
• **TANIGUCHI, Akira
Chiba-shi
Chiba 267-0056 (JP)**
• **KOTANI, Saori
Chiba-shi
Chiba 267-0056 (JP)**
• **NISHIKAWA, Naoki
Chiba-shi
Chiba 267-0056 (JP)**

(74) Representative: **Leifert & Steffan
Patentanwälte
Postfach 10 40 09
40031 Düsseldorf (DE)**

(54) **RESIN ADDITIVE, AND MASTER BATCH AND RESIN COMPOSITION IN WHICH SAME IS USED**

(57) There are provided a resin additive with which the generation of an isocyanate gas during the production of a master batch or a resin composition can be effectively suppressed when a carbodiimide compound is used as an additive for improving the hydrolysis resistance of a resin, a master batch using the above resin additive, and a method for producing the same, and a resin composition using the above resin additive, and a method for producing the same. A resin additive comprising a carbodiimide compound (A) and a surfactant (B), and a master batch and a resin composition comprising the above resin additive and a resin (D), and methods for producing these.

EP 3 357 960 A1

**Description**

Technical Field

The present invention relates to a resin additive used when a resin composition of a polyester resin, a polyamide resin, or the like is produced, a master batch using the above resin additive, and a method for producing the same, and a resin composition using the above resin additive, and a method for producing the same.

Background Art

Polyester resins such as PET are excellent in transparency, mechanical strength, melt stability, solvent resistance, and the like, and polyamide resins such as nylon are excellent in mechanical strength, flexibility, chemical resistance, and the like. Therefore, they are widely used for fibers, films, sheets, and the like and also utilized for recycling.
However, polyester resins and polyamide resins are obtained by polycondensation such as ester bonding and amide bonding and have the property of being easily hydrolyzed at these bonding sites due to deterioration over time. Therefore, for the purpose of improving hydrolysis resistance, carbodiimide compounds are added to resin compositions.
For example, regarding polyester resins, PTL1 discloses that an aromatic polycarbodiimide compound is blended into an aliphatic polyester resin to improve the hydrolysis resistance of an aliphatic polyester resin composition.
According to the aliphatic polyester resin composition described in PTL1, the hydrolysis of the aliphatic polyester resin is suppressed, but during mixing at the melting temperature of the aliphatic polyester resin or higher, the carboxyl group of the polyester resin and the carbodiimide group of the aromatic carbodiimide compound react with each other, and the aromatic carbodiimide compound decomposes. As a result, a large amount of an isocyanate gas, an irritant decomposed gas, is generated, and therefore it is necessary to restrict the work environment and ensure safety. In addition, when the polyester resin composition in which the amount of the isocyanate gas generated is large is injection-molded, soil on the mold is significant, causing a decrease in the yield of the molded article, and also a decrease in the production efficiency of the molded article accompanying the need to frequently wash the mold.
For such problems, for example, PTL2 discloses that an offensive odor due to a free isocyanate can be suppressed with a resin composition obtained by mixing a polyester and a cyclic carbodiimide compound.
In addition, PTL3 discloses that, in a polyester resin composition comprising a polyester resin and an aromatic carbodiimide and further an aliphatic carbodiimide, it is possible to suppress the generation of a decomposed gas derived from the aromatic carbodiimide added to improve the hydrolysis resistance stability of the polyester resin.

Citation List

Patent Literature

PTL1: WO 2008/010355 A
PTL2: WO 2010/071213 A
PTL3: JP 2014-139284 A

Summary of Invention

Technical Problem

The resin composition described in the above PTL2 is a compound having one carbodiimide group in one cyclic structure, and does not liberate an isocyanate compound even if it reacts with a polyester end. However, as a result of the reaction of the cyclic carbodiimide compound with a carboxyl group at a polyester end, an isocyanate group remains at the end of the polyester resin. The remaining isocyanate group further reacts with another end group such as a hydroxyl group, and therefore the polyester thickens, causing the deterioration of processability. In addition, the isocyanate group may be eliminated.
Meanwhile, according to the polyester resin composition described in the above PTL3, the generation of an isocyanate gas is suppressed, but the suppression effect still cannot be said to be sufficient.
Therefore, there is a need for a technique for more effectively suppressing the generation of an isocyanate gas during the heat processing, and melting and kneading, of a polyester resin or the like when using a carbodiimide compound as an additive for improving the hydrolysis resistance of the resin.
The present invention has been made in order to solve the above problem, and it is an object of the present invention to provide a resin additive with which the generation of an isocyanate gas during the production of a master batch or a resin composition can be effectively suppressed when a carbodiimide compound is used as an additive for improving the hydrolysis resistance of a resin, a master batch using the above resin additive, and a method for producing the same, and a resin composition using the above resin additive, and a method for producing the same.

Solution to Problem

The present invention is based on the finding that a predetermined surfactant is effective as a resin additive when the generation of an isocyanate gas derived from a carbodiimide compound is suppressed.
Specifically, the present invention provides the following [1] to [22].

[1] A resin additive comprising a carbodiimide compound (A) and a surfactant (B).
[2] The resin additive according to the above [1], further comprising a heterocyclic amine compound (C).
[3] The resin additive according to the above [1] or [2], wherein the surfactant (B) is a cationic surfactant or an amphoteric surfactant.
[4] The resin additive according to any one of the above [1] to [3], wherein the surfactant (B) has a vaporization temperature of 100 to 300°C and a decomposition temperature of higher than 300°C.
[5] The resin additive according to the above [3] or [4], wherein the cationic surfactant is at least any one of a quaternary ammonium salt type, an alkylamine salt type, and an alkylpyridinium salt type.
[6] The resin additive according to the above [3] or [4], wherein the amphoteric surfactant is at least any one of an alkyl betaine type, a fatty acid amidopropyl betaine type, and an alkylaminodicarboxylic acid type.
[7] The resin additive according to any one of the above [2] to [6], wherein the heterocyclic amine compound (C) has a vaporization temperature of 100 to 300°C and a decomposition temperature of higher than 300°C.
[8] The resin additive according to any one of the above [2] to [7], wherein the heterocyclic amine compound (C) is at least any one of pyrazole, dimethylpyrazole, and imidazole.
[9] The resin additive according to any one of the above [1] to [8], wherein the carbodiimide compound (A) is at least any one of an aromatic monocarbodiimide, an aromatic polycarbodiimide, an aliphatic monocarbodiimide, and an aliphatic polycarbodiimide.
[10] The resin additive according to any one of the above [1] to [9], wherein an amount of the surfactant (B) is 0.1 to 50 parts by mass based on 100 parts by mass of the carbodiimide compound (A).
[11] The resin additive according to any one of the above [2] to [10], wherein a total amount of the surfactant (B) and the heterocyclic amine compound (C) is 0.1 to 50 parts by mass based on 100 parts by mass of the carbodiimide compound (A).
[12] A master batch comprising the resin additive according to any one of the above [1] to [11] and a resin (D).
[13] The master batch according to the above [12], wherein a content of the carbodiimide compound (A) is 0.5 to 30 parts by mass based on 100 parts by mass of the resin (D).
[14] The master batch according to the above [12] or [13], wherein the resin (D) is at least any one of a polyester resin and a polyamide resin.
[15] A method for producing the master batch according to any one of the above [12] to [14], comprising melting and kneading the resin additive according to any one of the above [1] to [11] and the resin (D).
[16] A resin composition comprising a resin (D) and the resin additive according to any one of the above [1] to [11].
[17] A resin composition comprising the resin (D) and the master batch according to any one of the above [12] to [14].
[18] The resin composition according to the above [16] or [17], wherein a content of the carbodiimide compound (A) is 0.1 to 10 parts by mass based on 100 parts by mass of the resin (D).
[19] The resin composition according to any one of the above [16] to [18], wherein the resin (D) is at least any one of a polyester resin and a polyamide resin.
[20] A method for producing a resin composition, comprising melting and kneading the resin additive according to any one of the above [1] to [11] and a resin (D).
[21] A method for producing a resin composition, comprising melting and kneading the master batch according to any one of the above [12] to [14] and the resin (D).
[22] The method for producing a resin composition according to the above [20] or [21], wherein the resin (D) is at least any one of a polyester resin and a polyamide resin.

Advantageous Effects of Invention

According to the present invention, it is possible to provide a resin additive with which the generation of an isocyanate gas during the production of a master batch or a resin composition can be effectively suppressed when a carbodiimide compound is used as an additive for improving the hydrolysis resistance of a resin, and a master batch

EP 3 357 960 A1

and a resin composition using the same.

Therefore, according to the present invention, a master batch or a resin composition of a polyester resin or a polyamide resin having hydrolysis resistance can be produced while the generation of an irritant isocyanate gas is effectively suppressed to ensure a safe work environment.

Description of Embodiments

A resin additive, a master batch using the above resin additive, and a method for producing the same, and a resin composition using the above resin additive, and a method for producing the same according to the present invention will be described in detail below.

[Resin Additive]

The resin additive of the present invention comprises a carbodiimide compound (A) and a surfactant (B). According to such an additive, the generation of an isocyanate gas derived from the carbodiimide compound (A) can be suppressed by the surfactant (B) while hydrolysis resistance is provided to a resin having an easily hydrolyzable bonding site by the carbodiimide compound (A).

The above resin additive may be one in which the carbodiimide compound (A) and the surfactant (B) are previously prepared and mixed, or one in which both components are each added at the time of use.

The reason why the generation of an isocyanate gas is suppressed is considered to be that an isocyanate gas generated by the thermal decomposition of the reaction product of the carboxyl group, amino group, or the like of a resin and the carbodiimide group of the carbodiimide compound (A) reacts with the surfactant (B) vaporizing simultaneously and changes to a compound different from an isocyanate.

<Carbodiimide Compound (A)>

The carbodiimide compound (A) is a compound comprising a carbodiimide group (-N=C=N-) and is used for improving the hydrolysis resistance of a resin. Preferred examples of the carbodiimide compound (A) include aromatic monocarbodiimides, aromatic polycarbodiimides, aliphatic monocarbodiimides, and aliphatic polycarbodiimides. One of these may be used alone, or two or more of these may be used in combination. From the viewpoint of the reduction of the amount of an isocyanate gas generated, an aliphatic monocarbodiimide or an aliphatic polycarbodiimide is preferably used, and from the viewpoint of the suppression of viscosity increase and coloration prevention considering the processability of a resin, an aromatic monocarbodiimide or an aromatic polycarbodiimide is preferably used.

The aromatic monocarbodiimide is a carbodiimide compound in which one carbodiimide group is directly bonded to an aromatic ring. Specific examples include diphenylcarbodiimide, bis(methylphenyl)carbodiimide, bis(methoxyphenyl)carbodiimide, bis(nitrophenyl)carbodiimide, bis(dimethylphenyl)carbodiimide, bis(diisopropylphenyl)carbodiimide, and bis(dit-butylphenyl)carbodiimide. Among these, bis(diisopropylphenyl)carbodiimide is preferred from the viewpoint of improving the hydrolysis resistance of a resin.

The aromatic polycarbodiimide is a carbodiimide compound which has two or more carbodiimide groups in the molecule and in which the carbodiimide groups are directly bonded to aromatic rings, and can be synthesized, for example, by the decarboxylation condensation reaction of a diisocyanate using a carbodiimidization catalyst such as an organophosphorus compound or an organometallic compound. Specific examples of the above diisocyanate include 1,5-naphthalene diisocyanate, 4,4'-diphenylmethane diisocyanate, 4,4'-diphenyldimethylmethane diisocyanate, 1,3-phenylene diisocyanate, 1,4-phenylene diisocyanate, 2,4-tolylene diisocyanate, 2,6-tolylene diisocyanate, 3,3',5,5'-tetraisopropylbiphenyl-4,4'-diisocyanate, and 1,3,5-triisopropylbenzene-2,4-diisocyanate. One of these may be used alone, or two or more of these may be used in combination. Among these, 4,4'-diphenylmethane diisocyanate and 1,3,5-triisopropylbenzene-2,4-diisocyanate are preferred from the viewpoint of high stability and the improvement of the hydrolysis resistance of a resin.

The aliphatic monocarbodiimide is a carbodiimide compound in which one carbodiimide group is directly bonded to carbon other than carbon in an aromatic ring. Specific examples include dicyclohexylcarbodiimide, diisopropylcarbodiimide, and N-ethyl-N'-(3-dimethylaminopropyl)carbodiimide. Among these, dicyclohexylcarbodiimide is preferred from the viewpoint of improving the hydrolysis resistance of a resin.

The aliphatic polycarbodiimide is a polycarbodiimide which has two or more carbodiimide groups in the molecule and in which the carbodiimide groups are bonded to carbon atoms other than those in aromatic rings, and can be synthesized, for example, by the decarboxylation condensation reaction of a diisocyanate using a carbodiimidization catalyst such as an organophosphorus compound or an organometallic compound. Specific examples of the above diisocyanate include hexamethylene diisocyanate, cyclohexane-1,4-diisocyanate, isophorone diisocyanate, 4,4'-dicyclohexylmethane diisocyanate, methylcyclohexane diisocyanate, 1,3-bis(isocyanatomethyl)cyclohexane, xylylene diiso-

4

cyanate, and tetramethylxylylene diisocyanate. One of these may be used alone, or two or more of these may be used in combination. Among these, 4,4'-dicyclohexylmethane diisocyanate is preferred from the viewpoint of high stability and the improvement of the hydrolysis resistance of a resin.

The aromatic polycarbodiimide or the aliphatic polycarbodiimide is blocked by reaction with a monofunctional compound having reactivity with an isocyanate group at an end of the diisocyanate used for synthesis and the degree of polymerization of these polycarbodiimide can be adjusted. Examples of such a compound include monoisocyanates such as phenyl isocyanate, tolyl isocyanate, isopropylphenyl isocyanate, and cyclohexyl isocyanate; alcohols such as methanol, isopropyl alcohol, phenol, and polyethylene glycol monomethyl ether; amines such as butylamine, diethylamine, and cyclohexylamine; and carboxylic acids such as propionic acid and benzoic acid.

The degree of polymerization of the aromatic polycarbodiimide or the aliphatic polycarbodiimide is preferably 2 to 200, more preferably 5 to 30, from the viewpoint of the suppression of the generation of an isocyanate gas during the melting and kneading of a resin.

<Surfactant (B)>

The surfactant (B) has the function of suppressing the generation of an isocyanate gas derived from the carbodiimide compound (A), and a cationic surfactant or an amphoteric surfactant is preferred.

For the surfactant (B), from the viewpoint of effectively suppressing the generation of an isocyanate gas during the melting and kneading of a resin, a surfactant that vaporizes without decomposing around the melting temperature of the added resin is preferred, and a surfactant having a vaporization temperature of 100 to 300°C and a decomposition temperature of higher than 300°C is preferred.

The above vaporization temperature and decomposition temperature are values measured by a thermogravimetric-differential thermal analysis (TG-DTA) apparatus.

Specific examples of the cationic surfactant include a quaternary ammonium salt type such as alkyltrimethylammonium chlorides, an alkylamine salt type such as trimethylamine hydrochloride, and compounds having a pyridine ring such as dodecylpyridinium chloride. Among these, a quaternary ammonium salt type or an alkylamine type is preferred from the viewpoint of easy industrial availability, reactivity with an isocyanate gas, and volatility during melting and kneading with a resin.

Specific examples of the amphoteric surfactant include an alkyl betaine type such as lauryl dimethylaminoacetic acid betaine, a fatty acid amidopropyl betaine type such as cocamidopropyl betaine, an alkylimidazole type such as 2-alkyl-N-carboxymethyl-N-hydroxyethylimidazolinium betaines, an amino acid type such as sodium N-lauroyl glutamate, an amine oxide type such as lauryl dimethylamine oxide, and an alkylaminodicarboxylic acid type such as monosodium lauryl aminodiacetate. Among these, an alkyl betaine type, a fatty acid amidopropyl betaine type, or an alkylaminodicarboxylic acid type is preferred from the viewpoint of easy industrial availability, reactivity with an isocyanate gas, and volatility during melting and kneading with a resin.

The resin additive of the present invention may further comprise a heterocyclic amine compound (C).

In this case, the above resin additive may be one in which the carbodiimide compound (A), the surfactant (B), and the heterocyclic amine compound (C) are previously prepared and mixed, or one in which these components are each added at the time of use.

<Heterocyclic Amine Compound (C)>

The heterocyclic amine compound (C) is used in combination with the surfactant (B), and has the function of suppressing the generation of an isocyanate gas derived from the carbodiimide compound (A), like the surfactant (B). Therefore, from the viewpoint of effectively suppressing the generation of an isocyanate gas during the melting and kneading of a resin, like the surfactant (B), the heterocyclic amine compound (C) preferably vaporizes without decomposing around the melting temperature of the added resin, and a heterocyclic amine compound having a vaporization temperature of 100 to 300°C and a decomposition temperature of higher than 300°C is preferred. The above vaporization temperature and the above decomposition temperature are values obtained by the same measurement method as the surfactant (B) described above.

Specific examples of the heterocyclic amine compound (C) include pyrrolidine, piperidine, piperazine, morpholine, quinuclidine, pyrrole, pyrazole, imidazole, pyridine, pyridazine, pyrimidine, pyrazine, oxazole, and thiazole. One of these may be used alone, or two or more of these may be used in combination. Among these, from the viewpoint of easy industrial availability, reactivity with an isocyanate gas, and volatility during melting and kneading with a resin, pyrazole, dimethylpyrazole, or imidazole is preferred, and dimethylpyrazole is more preferred.

The content of the surfactant (B) in the above resin additive is preferably 0.1 to 50 parts by mass, more preferably 0.5 to 30 parts by mass, and further preferably 1 to 20 parts by mass based on 100 parts by mass of the carbodiimide compound (A) from the viewpoint of sufficiently reducing the amount of an isocyanate gas generated during the melting and kneading of a resin without significantly decreasing hydrolysis resistance provided by the carbodiimide compound (A) or coloring the resin.

When the heterocyclic amine compound (C) is used in combination with the surfactant (B), the total content of the surfactant (B) and the heterocyclic amine compound (C) in the above resin additive is preferably 0.1 to 50 parts by mass, more preferably 0.5 to 30 parts by mass, and further preferably 1 to 20 parts by mass based on 100 parts by mass of the carbodiimide compound (A) from the same viewpoint as the above.

[Master Batch]

The master batch of the present invention comprises the resin additive of the present invention and a resin (D). In other words, the master batch of the present invention comprises the carbodiimide compound (A), the surfactant (B), and the resin (D) and may further comprise the heterocyclic amine compound (C). When a master batch comprising a resin and the resin additive of the present invention in this manner is used, the uniform dispersibility of the carbodiimide compound (A) improves and the generation of an isocyanate gas derived from the carbodiimide compound (A) can be simply suppressed when a resin composition having hydrolysis resistance is produced.

<Resin (D)>

As the resin (D), a resin whose hydrolysis resistance is improved by the addition of the carbodiimide compound (A) is used. Specific examples include polyester resins and polyamide resins.

Examples of the polyester resins include polyethylene terephthalate (PET), polybutylene terephthalate (PBT), polybutylene succinate (PBS), polybutylene succinate adipate (PBSA), polybutylene adipate terephthalate (PBAT), polyhydroxyalkanoic acids (PHA), polylactic acid (PLA), polyethylene naphthalate, polyarylates, and ethylene terephthalate-isophthalate copolymers. One of these may be used alone, or two or more of these may be used in combination. Among these, polyethylene terephthalate, polybutylene terephthalate, polybutylene succinate, polyhydroxyalkanoic acids, or polylactic acid is preferably used from the viewpoint of easy industrial availability, recycling utilization, and the like.

Examples of the polyamide resins include nylon 6, nylon 11, nylon 12, nylon 66, nylon 610, and nylon 6T.

The content of the carbodiimide compound (A) in the above master batch is preferably 0.5 to 30 parts by mass, more preferably 1 to 20 parts by mass, and further preferably 2 to 15 parts by mass based on 100 parts by mass of the resin (D) from the viewpoint of the improvement of the hydrolysis resistance of a resin composition produced using the master batch.

The above master batch can be produced by melting and kneading the above resin additive and the resin (D). In other words, the above master batch is obtained by melting and kneading at least the carbodiimide compound (A) and the surfactant (B), and the resin (D), or by melting and kneading at least the carbodiimide compound (A), the surfactant (B), and the heterocyclic amine compound (C), and the resin (D).

According to such a production method, the master batch can be produced while the generation of an isocyanate gas derived from the carbodiimide compound (A) is simply suppressed during the melting and kneading of the resin to ensure a safe work environment.

Examples of specific modes of the method for producing the above master batch include (1) a method of melting and kneading a mixture obtained by previously mixing the resin (D) and the above resin additive, and (2) a method of adding the above resin additive to the resin (D) melted, and kneading the mixture.

From the viewpoint of effectively suppressing the generation of an isocyanate gas, the surfactant (B) (and the heterocyclic amine compound (C)) is preferably added to the resin (D) before or simultaneously with the carbodiimide compound (A) of the components of the above resin additive during melting and kneading.

The melting and kneading means is not particularly limited, and melting and kneading can be performed using a known kneading machine. For example, the resin (D) can be melted and kneaded by a single-screw or twin-screw extruder, a roll mixing machine, or the like.

In melting and kneading, additives other than the components of the above resin additive may be added in a range that does not impair the effects of the present invention. Examples of the additives include inorganic fillers such as silica, alumina, sand, clay, and slag; reinforcing agents such as needle-shaped inorganic matter; colorants such as titanium oxide; stabilizers such as radical scavengers and antioxidants; flame retardants such as metal hydrates, halogen-based flame retardants, and phosphorus-based flame retardants; crystal nucleating agents such as talc; antimicrobial agents such as silver ions, copper ions, and zeolites containing these; and fungicides.

[Resin Composition]

The resin composition of the present invention comprises the resin (D) and the resin additive of the present invention. Alternatively, the resin composition of the present invention comprises the resin (D) and the master batch of the present invention.

The above master batch is distinguished from the above resin composition, and the resin composition in the present invention does not include the above master batch. The resin (D) here is the same as the resin (D) in the above master batch, and therefore description is omitted.

The content of the carbodiimide compound (A) of the components of the above resin additive in the above resin composition is preferably 0.1 to 10 parts by mass, more preferably 0.3 to 5 parts by mass, and further preferably 0.5 to 3 parts by mass based on 100 parts by mass of the resin (D) from the viewpoint of the improvement of the hydrolysis resistance of the resin composition.

The above resin composition can be produced by melting and kneading the above resin additive and the resin (D). In other words, the above resin composition is obtained by melting and kneading at least the carbodiimide compound (A) and the surfactant (B), and the resin (D), or by melting and kneading at least the carbodiimide compound (A), the surfactant (B), and the heterocyclic amine compound (C), and the resin (D).

The above resin composition can also be produced by melting and kneading the above master batch and the resin (D).

According to such production methods, the resin composition can be produced while the generation of an isocyanate gas derived from the carbodiimide compound (A) is simply suppressed during the melting and kneading of the resin to ensure a safe work environment.

Further, with the above resin composition, the effect of suppressing soil on a mold when injection-molding the resin composition is also obtained with the suppression of the generation of an isocyanate gas.

Examples of specific modes of the method for producing the above resin composition include (1): a method of melting and kneading a mixture obtained by previously mixing the resin (D) and the above resin additive, and (2): a method of adding the above resin additive to the resin (D) melted, and kneading the mixture. When the master batch is used, examples of specific modes of the method for producing the above resin composition include (3): a method of melting and kneading a mixture obtained by previously mixing the resin (D) and the above master batch, and (4): a method of adding the above master batch to the resin (D) melted, and melting and kneading the mixture. Among these, from the viewpoint of production efficiency, the method of (3) or (4) using the master batch is preferred, and the method of (3) is more preferred.

In the methods of the above (1) and (2), from the viewpoint of effectively suppressing the generation of an isocyanate gas, the surfactant (B) (and the heterocyclic amine compound (C)) is preferably added to the resin (D) before or simultaneously with the carbodiimide compound (A) of the components of the above resin additive during melting and kneading.

The melting and kneading means and the additives other than the components of the above resin additive are the same as the case of the method for producing the master batch described above.

As the method for molding the above resin composition, known methods such as an injection molding method, a film molding method, a blow molding method, and a foaming method can be used. The above resin composition can be molded into a variety of forms such as a film shape, a sheet shape, and a block shape at the melting temperature of the resin or higher, and processed products of materials and members in various applications can be obtained. Specifically, the above resin composition can be used in various applications such as electrical and electronic equipment members such as housings for electrical appliances, building materials, automobile parts, daily necessities, medical supplies, and agricultural supplies.

Examples

The present invention will be described in detail below by Examples, but the present invention is not limited by these.

[Production of Resin Compositions]

In the Examples, Comparative Examples, and Reference Examples, resin compositions and master batches shown in the following Tables 1 to 4 were produced by various methods for adding resin additives shown below, using, as the carbodiimide compound (A), the surfactant (B), and the heterocyclic amine compound (C) (the above constituted a resin additive), and the resin (D), those shown below, as typical examples.

<Carbodiimide Compounds (A)>

- aromatic monocarbodiimide: bis(diisopropylphenyl)carbodiimide; "Stabaxol 1" manufactured by LANXESS

- aromatic polycarbodiimide: polydiphenylmethanecarbodiimide; "CARBODILITE 10M-SP" manufactured by Nisshinbo Chemical Inc.
- aliphatic polycarbodiimide: polydicyclohexylmethanecarbodiimide; "CARBODILITE LA-1" manufactured by Nisshinbo Chemical Inc.

<Surfactants (B)>

(Cationic Surfactants)

- quaternary ammonium salt type: aliphatic alkyl quaternary ammonium salt; "Cirrasol G-265" manufactured by Croda; vaporization temperature 210°C, decomposition temperature 325°C
- alkylamine salt type: hydroxyalkylamine salt; "Duspar 125B" manufactured by MIYOSHI OIL & FAT CO., LTD.; vaporization temperature 198°C, decomposition temperature 310°C

(Amphoteric Surfactants)

- coconut oil fatty acid amidopropyl betaine: "LEBON 2000 (dry product)" manufactured by Sanyo Chemical Industries, Ltd.; vaporization temperature 230°C, decomposition temperature 305°C
- monosodium lauryl aminodiacetate: "NISSANANON LA powder" manufactured by NOF CORPORATION; vaporization temperature 180°C, decomposition temperature 330°C

<Heterocyclic Amine Compound (C)>

- dimethylpyrazole: manufactured by Otsuka Chemical Co., Ltd.; vaporization temperature 120°C, decomposition temperature: no peak is seen as decomposition by TG-DTA up to 400°C

<Resins (D)>

(Polyester Resins)

- PET: polyethylene terephthalate; "TRN-8550FF" manufactured by TEIJIN LIMITED
- PBT: polybutylene terephthalate; "PLANAC" manufactured by Toyobo Co., Ltd.
- PLA: polylactic acid; "Ingeo 4032D" manufactured by NatureWorks LLC (Polyamide Resin)
- nylon 6: "UBE Nylon" manufactured by Ube Industries, Ltd.

<Methods for Adding Resin Additives>

I: A mixture obtained by previously mixing the carbodiimide compound (A) and the surfactant (B) (and the heterocyclic amine compound (C)) was added to the resin (D) melted, and the mixture was kneaded.
II: The surfactant (B) was added to the resin (D) melted, and the mixture was kneaded. Then, the carbodiimide compound (A) was added, and the mixture was kneaded.
III: The surfactant (B) was added to the resin (D) melted, and the mixture was kneaded. Then, the heterocyclic amine compound (C) was added, and the mixture was kneaded. Then, the carbodiimide compound (A) was added, and the mixture was kneaded.
IV: The resin (D) and a master batch made by the addition method of the above I were mixed, and melted and kneaded.

[Evaluation Methods]

In the production of the resin compositions or the master batches of the above Examples, Comparative Examples, and Reference Examples, various evaluations were performed by methods shown below. The measurement results of these are also shown together in Tables 1 to 4.

<Amount of Isocyanate Gas Generated (Gas Concentration)>

During the melting of the resin (D) and the kneading of each blending composition, the amount of an isocyanate gas generated (gas concentration) from the resin introduction port of a lab mixer was measured by an isocyanate gas measuring instrument ("ChemKey Gas Monitor TLD-1" manufactured by Honeywell; detectable range 2 to 60 ng/L).

<Hydrolysis Resistance of Resin Composition>

Each resin composition produced was ground by a lab small grinder, then sheeted to a thickness of 1 mm by hot pressing under the following conditions, and further crystallized. The crystallized sheet was cut into a strip shape of 1 cm × 10 cm to provide a measurement sample, and the measurement sample was subjected to wet heat treatment under the following treatment conditions.

Hot Pressing Conditions

PET and PBT: 270°C
PLA: 190°C
nylon 6: 280°C

Wet Heat Treatment Conditions

PET and PBT: 121°C, water vapor pressure 2 atm
PLA: 80°C, 95% RH
nylon 6: 121°C, water vapor pressure 2 atm

After the wet heat treatment for a predetermined time, the tensile strength of each measurement sample was measured by a universal material tester (manufactured by Instron; model 5582), and the tensile strength retention rate was calculated by the following expression:

$$\text{Tensile strength retention rate (\%)} = (\text{Tensile strength after wet heat}$$
$$\text{treatment for predetermined time / Initial tensile strength}) \times 100$$

The time until the tensile strength retention rate reached 50% was taken as hydrolysis resistance time. It is shown that as the hydrolysis resistance time becomes longer, the hydrolysis resistance becomes better.

<Soil on Mold>

For each resin composition produced, molded articles of 100 mm × 100 mm × 1 mm thick were continuously molded in 300 shots by an injection molding machine under molding conditions shown below, using a mold made of steel.

Molding Conditions

cylinder temperature: 280°C
mold temperature: 60°C

cycle time: 40 seconds

Soil (cloudiness and oil film) adhering to the mold after the molding was evaluated by visual confirmation and wiping with a waste cloth. The evaluation criteria are as follows:

Evaluation Criteria

A: No white cloudiness or iridescent oil film was produced at all on the mold surface.
B: White cloudiness and an iridescent oil film were slightly produced on the mold surface, but the soil was easily wiped off.
C: White cloudiness and an iridescent oil film were produced on the mold surface, and it was difficult to wipe off the soil.
D: White cloudiness and an iridescent oil film were significantly produced on the mold surface, and the soil could not be wiped off.

For those for which soil on the mold is not evaluated, "-" is given in Tables 1 to 4.

[PET Resin]

The blending compositions of the produced PET resin compositions and master batch are shown in the following Table 1.

(Example 1)

49.5 parts by mass of PET as the resin (D) was melted in a lab mixer (LABO PLASTOMILL "Segment Mixer KF70V" manufactured by Toyo Seiki Seisaku-sho, Ltd.; the same applies below) at 280°C, and then a resin additive obtained by previously mixing 0.5 parts by mass of the aromatic monocarbodiimide as the carbodiimide compound (A) and 0.05 parts by mass of coconut oil fatty acid amidopropyl betaine as the surfactant (B) was added, and the mixture was kneaded for 3 minutes to produce a PET resin composition (addition method: I).

(Examples 2 to 4, 8, 9, and 12 to 16)

The blending composition for the carbodiimide compound (A), the surfactant (B), and the resin (D) was as shown in the following Table 1. Except for this, a PET resin composition was produced as in Example 1.

(Example 5)

49.5 parts by mass of PET as the resin (D) was melted in a lab mixer at 280°C, and then 0.05 parts by mass of coconut oil fatty acid amidopropyl betaine as the surfactant (B) was added, and the mixture was kneaded for 30 seconds. Then, 0.5 parts by mass of the aromatic monocarbodiimide as the carbodiimide compound (A) was added, and the mixture was kneaded for 2 minutes and 30 seconds to produce a PET resin composition (addition method: II).

(Example 6) Production of Master Batch

45.0 parts by mass of PET as the resin (D) was melted in a lab mixer at 280°C, and then a resin additive obtained by previously mixing 5.0 parts by mass of the aromatic monocarbodiimide as the carbodiimide compound (A) and 0.5 parts by mass of coconut oil fatty acid amidopropyl betaine as the surfactant (B) was added, and the mixture was kneaded for 3 minutes to produce a PET resin-based master batch (addition method: I).

(Example 7)

45.0 parts by mass of PET as the resin (D) and 5.05 parts by mass of the PET resin-based master batch produced in Example 6 were mixed, and kneaded in a lab mixer at 280°C for 3 minutes to produce a PET resin composition (addition method: IV).

(Example 10)

The resin additive also comprised 0.05 parts by mass of dimethylpyrazole as the heterocyclic amine compound (C) in Example 1. Except for this, a PET resin composition was produced as in Example 1.

(Example 11)

49.5 parts by mass of PET as the resin (D) was melted in a lab mixer at 280°C, and then 0.05 parts by mass of coconut oil fatty acid amidopropyl betaine as the surfactant (B) was added, and the mixture was kneaded for 15 seconds. Further, 0.05 parts by mass of dimethylpyrazole as the heterocyclic amine compound (C) was added, and the mixture was kneaded for 15 seconds. Then, 0.5 parts by mass of the aromatic monocarbodiimide as the carbodiimide compound (A) was added, and the mixture was kneaded for 2 minutes and 30 seconds to produce a PET resin composition (addition method: III).

(Comparative Example 1)

The surfactant (B) was not added in Example 1. Except for this, a PET resin composition was produced as in Example 1.

(Comparative Example 2)

The surfactant (B) was not added in Example 12. Except for this, a PET resin composition was produced as in Example 12.

(Comparative Example 3)

The surfactant (B) was not added in Example 14. Except for this, a PET resin composition was produced as in Example 14.

(Comparative Example 4)

The surfactant (B) was not added in Example 16. Except for this, a PET resin composition was produced as in Example 16.

(Reference Example 1)

Only PET as the resin (D) was melted in a lab mixer at 280°C, and then kneaded for 3 minutes to produce a blank for a PET resin composition.

Table 1

| | Reference Example | Examples | | | | | | | | | | | Comparative Example | Examples | | Comparative Example | Examples | | Comparative Example | Examples | Comparative Example |
|---|---|---|---|---|---|---|---|---|---|---|---|---|---|---|---|---|---|---|---|---|---|
| | 1 | 1 | 2 | 3 | 4 | 5 | 6 | 7 | 8 | 9 | 10 | 11 | 1 | 12 | 13 | 2 | 14 | 15 | 3 | 16 | 4 |
| **Carbodiimide compound (A) [parts by mass]** | | | | | | | | | | | | | | | | | | | | | |
| Aromatic monocarbodiimide | - | 0.5 | 0.5 | 0.5 | 0.5 | 0.5 | 5 | | 0.5 | 0.5 | 0.5 | 0.5 | 0.5 | - | - | - | - | - | - | 0.5 | 0.5 |
| Aromatic polycarbodiimide | - | - | - | - | - | - | - | | - | - | - | - | - | 0.5 | 0.5 | 0.5 | - | - | - | - | - |
| Aliphatic polycarbodiimide | - | - | - | - | - | - | - | | - | - | - | - | - | - | - | - | 0.5 | 0.5 | 0.5 | 0.5 | 0.5 |
| **Surfactant (B) [parts by mass]** | | | | | | | | Master batch 5.05 parts by mass | | | | | | | | | | | | | |
| Cationic — Quaternary ammonium salt type | - | - | - | - | - | - | - | | 0.05 | - | - | - | - | - | - | - | - | - | - | - | - |
| Cationic — Alkylamine salt type | - | - | - | - | - | - | - | | - | 0.05 | - | - | - | - | 0.05 | - | - | 0.05 | - | - | - |
| Amphoteric — Coconut oil fatty acid amidopropyl betaine | - | 0.05 | 0.005 | 0.1 | - | 0.05 | 0.5 | | - | - | 0.05 | 0.05 | - | 0.05 | - | - | 0.05 | - | - | 0.05 | - |
| Amphoteric — Monosodium lauryl aminodiacetate | - | - | - | - | 0.05 | - | - | | - | - | - | - | - | - | - | - | - | - | - | - | - |
| **Heterocyclic Amine Compound (C) [parts by mass]** | | | | | | | | | | | | | | | | | | | | | |
| Dimethylpyrazole | - | - | - | - | - | - | - | | - | - | 0.05 | 0.05 | - | - | - | - | - | - | - | - | - |
| **Resin (D) [parts by mass]** | | | | | | | | | | | | | | | | | | | | | |
| PET | 50.0 | 49.5 | 49.5 | 49.5 | 49.5 | 49.5 | 45 | 45 | 49.5 | 49.5 | 49.5 | 49.5 | 49.5 | 49.5 | 49.5 | 49.5 | 49.5 | 49.5 | 49.5 | 49.0 | 49.0 |
| Addition method | - | I | I | I | I | II | I | IV | I | I | I | III | I | I | I | I | I | I | I | I | I |
| Isocyanate gas concentration [ng/L] | 0 | 14 | 38 | 3 | 18 | 11 | 41 | 14 | 18 | 14 | 8 | 5 | 60≤ | 10 | 9 | 46 | 3 | 3 | 23 | 7 | 38 |
| Hydrolysis resistance time [hr] | 20 | 48 | 48 | 48 | 48 | 48 | - | 48 | 48 | 48 | 40 | 40 | 48 | 48 | 48 | 48 | 36 | 36 | 36 | 40 | 40 |
| Soil on mold | - | B | C | A | B | - | - | - | C | B | B | - | C | B | B | C | A | A | D | B | D |

[PBT Resin]

The blending compositions of the produced PBT resin compositions and master batch are shown in the following Table 2.

(Examples 17 and 21 to 23)

49.5 parts by mass of PBT as the resin (D) was melted in a lab mixer at 280°C, and then a resin additive obtained by previously mixing the carbodiimide compound (A) and the surfactant (B) with a blending composition shown in the following Table 2 was added, and the mixture was kneaded for 3 minutes to produce a PBT resin composition (addition method: I).

(Example 18)

49.5 parts by mass of PBT as the resin (D) was melted in a lab mixer at 280°C, and then 0.05 parts by mass of coconut oil fatty acid amidopropyl betaine as the surfactant (B) was added, and the mixture was kneaded for 30 seconds. Then, 0.5 parts by mass of the aromatic monocarbodiimide as the carbodiimide compound (A) was added, and the mixture was kneaded for 2 minutes and 30 seconds to produce a PBT resin composition (addition method: II).

(Example 19) Production of Master Batch

45.0 parts by mass of PBT as the resin (D) was melted in a lab mixer at 280°C, and then a resin additive obtained by previously mixing 5.0 parts by mass of the aromatic monocarbodiimide as the carbodiimide compound (A) and 0.5 parts by mass of coconut oil fatty acid amidopropyl betaine as the surfactant (B) was added, and the mixture was kneaded for 3 minutes to produce a PBT resin-based master batch (addition method: I).

(Example 20)

45.0 parts by mass of PBT as the resin (D) and 5.05 parts by mass of the PBT resin-based master batch produced in Example 19 were mixed, and kneaded in a lab mixer at 280°C for 3 minutes to produce a PBT resin composition (addition method: IV).

(Comparative Example 5)

The surfactant (B) was not added in Example 13. Except for this, a PBT resin composition was produced as in Example 13.

(Comparative Example 6)

The surfactant (B) was not added in Example 22. Except for this, a PBT resin composition was produced as in Example 22.

(Reference Example 2)

Only PBT as the resin (D) was melted in a lab mixer at 280°C, and then kneaded for 3 minutes to produce a blank for a PBT resin composition.

Table 2

| | Reference Example | Examples | | | | | Comparative Example | Examples | | Comparative Example |
|---|---|---|---|---|---|---|---|---|---|---|
| | 2 | 17 | 18 | 19 | 20 | 21 | 5 | 22 | 23 | 6 |
| Carbodiimide compound (A) [parts by mass] | | | | | | | | | | |
|   Aromatic monocarbodiimide | - | 0.5 | 0.5 | 5.0 | Master batch 5.05 parts by mass | 0.5 | 0.5 | - | - | - |
|   Aliphatic polycarbodiimide | - | - | - | - | | - | - | 0.5 | 0.5 | 0.5 |
| Surfactant (B) [parts by mass] | | | | | | | | | | |
|   Cationic — Alkylamine salt type | - | - | | | | 0.05 | - | - | - | - |
|   Amphoteric — Coconut oil fatty acid amidopropyl betaine | - | 0.05 | 0.05 | 0.5 | | - | - | 0.05 | - | - |
|   Amphoteric — Monosodium lauryl aminodiacetate | - | - | - | - | | - | - | - | 0.05 | - |
| Resin (D) [parts by mass] | | | | | | | | | | |
|   PBT | 50.0 | 49.5 | 49.5 | 45.0 | 45.0 | 49.5 | 49.5 | 49.5 | 49.5 | 49.5 |
| Addition method | - | I | II | I | IV | I | I | I | I | I |
| Isocyanate gas concentration [ng/L] | 0 | 16 | 13 | 42 | 16 | 14 | 60≤ | 5 | 7 | 28 |
| Hydrolysis resistance time [hr] | 72 | 200 | 200 | - | 200 | 200 | 200 | 160 | 160 | 160 |
| Soil on mold | - | C | - | - | - | B | C | A | B | D |

[PLA Resin]

The blending compositions of the produced PLA resin compositions and master batch are shown in the following Table 3.

(Examples 24 and 28)

49.5 parts by mass of PLA as the resin (D) was melted in a lab mixer at 210°C, and then a resin additive obtained by previously mixing the carbodiimide compound (A) and the surfactant (B) with a blending composition shown in the following Table 3 was added, and the mixture was kneaded for 3 minutes to produce a PLA resin composition (addition method: I).

(Example 25)

49.5 parts by mass of PLA as the resin (D) was melted in a lab mixer at 210°C, and then 0.05 parts by mass of coconut oil fatty acid amidopropyl betaine as the surfactant (B) was added, and the mixture was kneaded for 30 seconds. Then, 0.5 parts by mass of the aromatic monocarbodiimide as the carbodiimide compound (A) was added, and the mixture was kneaded for 2 minutes and 30 seconds to produce a PLA resin composition (addition method: II).

(Example 26) Production of Master Batch

45.0 parts by mass of PLA as the resin (D) was melted in a lab mixer at 210°C, and then a resin additive obtained by previously mixing 5.0 parts by mass of the aromatic monocarbodiimide as the carbodiimide compound (A) and 0.5 parts by mass of coconut oil fatty acid amidopropyl betaine as the surfactant (B) was added, and the mixture was kneaded for 3 minutes to produce a PLA resin-based master batch (addition method: I).

(Example 27)

45.0 parts by mass of PLA as the resin (D) and 5.05 parts by mass of the PLA resin-based master batch produced in Example 26 were mixed, and kneaded in a lab mixer at 210°C for 3 minutes to produce a PLA resin composition (addition method: IV).

(Comparative Example 7)

The surfactant (B) was not added in Example 24. Except for this, a PLA resin composition was produced as in Example 24.

(Comparative Example 8)

The surfactant (B) was not added in Example 28. Except for this, a PLA resin composition was produced as in Example 28.

(Reference Example 3)

Only PLA as the resin (D) was melted in a lab mixer at 210°C, and then kneaded for 3 minutes to produce a blank for a PLA resin composition.

Table 3

| | | Reference Example | Examples | | | | Comparative Example | Example | Comparative Example |
|---|---|---|---|---|---|---|---|---|---|
| | | 3 | 24 | 25 | 26 | 27 | 7 | 28 | 8 |
| Carbodiimide compound (A) [parts by mass] | | | | | | | | | |
| | Aromatic monocarbodiimide | - | 0.5 | 0.5 | 5.0 | Master batch 5.05 parts by mass | 0.5 | - | - |
| | Aliphatic polycarbodiimide | - | - | - | - | | - | 0.5 | 0.5 |
| Surfactant (B) [parts by mass] | | | | | | | | | |
| Amphoteric | Coconut oil fatty acid amidopropyl betaine | - | 0.05 | 0.05 | 0.5 | | - | 0.05 | - |
| | Monosodium lauryl aminodiacetate | - | - | - | - | | - | - | - |
| Resin (D) [parts by mass] | | | | | | | | | |
| | PLA | 50.0 | 49.5 | 49.5 | 45.0 | 45.0 | 49.5 | 49.5 | 49.5 |
| Addition method | | - | I | II | I | IV | I | I | I |
| Isocyanate gas concentration [ng/L] | | 0 | 10 | 8 | 37 | 10 | 60≤ | 6 | 20 |
| Hydrolysis resistance time [hr] | | 40 | 72 | 72 | - | 72 | 72 | 150 | 150 |

[Nylon 6 Resin]

The blending compositions of the produced nylon 6 resin compositions and master batch are shown in the following Table 4.

(Examples 29 and 33)

49.5 parts by mass of nylon 6 as the resin (D) was melted in a lab mixer at 280°C, and then a resin additive obtained by previously mixing the carbodiimide compound (A) and the surfactant (B) with a blending composition shown in the following Table 4 was added, and the mixture was kneaded for 3 minutes to produce a nylon 6 resin composition (addition method: I).

(Example 30)

49.5 parts by mass of nylon 6 as the resin (D) was melted in a lab mixer at 280°C, and then 0.05 parts by mass of coconut oil fatty acid amidopropyl betaine as the surfactant (B) was added, and the mixture was kneaded for 30 seconds. Then, 0.5 parts by mass of the aromatic monocarbodiimide as the carbodiimide compound (A) was added, and the mixture was kneaded for 2 minutes and 30 seconds to produce a nylon 6 resin composition (addition method: II).

(Example 31) Production of Master Batch

45.0 parts by mass of nylon 6 as the resin (D) was melted in a lab mixer at 280°C, and then a resin additive obtained by previously mixing 5.0 parts by mass of the aromatic monocarbodiimide as the carbodiimide compound (A) and 0.5 parts by mass of coconut oil fatty acid amidopropyl betaine as the surfactant (B) was added, and the mixture was kneaded for 3 minutes to produce a nylon 6 resin-based master batch (addition method: I).

(Example 32)

45.0 parts by mass of nylon 6 as the resin (D) and 5.05 parts by mass of the nylon 6 resin-based master batch produced in Example 31 were mixed, and kneaded in a lab mixer at 280°C for 3 minutes to produce a nylon 6 resin composition (addition method: IV).

(Comparative Example 9)

The surfactant (B) was not added in Example 29. Except for this, a nylon 6 resin composition was produced as in Example 29.

(Comparative Example 10)

The surfactant (B) was not added in Example 33. Except for this, a nylon 6 resin composition was produced as in Example 33.

(Reference Example 4)

Only nylon 6 as the resin (D) was melted in a lab mixer at 280°C, and then kneaded for 3 minutes to produce a blank for a nylon 6 resin composition.

Table 4

| | | Reference Example | Examples | | | | Comparative Example | Example | Comparative Example |
|---|---|---|---|---|---|---|---|---|---|
| | | 4 | 29 | 30 | 31 | 32 | 9 | 33 | 10 |
| Carbodiimide compound (A) [parts by mass] | | | | | | | | | |
| | Aromatic monocarbodiimide | - | 0.5 | 0.5 | 5.0 | Master batch 5.05 parts by mass | 0.5 | - | - |
| | Aliphatic polycarbodiimide | - | - | - | - | | - | 0.5 | 0.5 |
| Surfactant (B) [parts by mass] | | | | | | | | | |
| Amphoteric | Coconut oil fatty acid amidopropyl betaine | - | 0.05 | 0.05 | 0.5 | | - | 0.05 | - |
| | Monosodium lauryl aminodiacetate | - | - | - | - | | - | - | - |
| Resin (D) [parts by mass] | | | | | | | | | |
| | Nylon 6 | 50.0 | 49.5 | 49.5 | 45.0 | 45.0 | 49.5 | 49.5 | 49.5 |
| Addition method | | - | I | II | I | IV | I | I | I |
| Isocyanate gas concentration [ng/L] | | 0 | 18 | 17 | 50 | 18 | 60≤ | 8 | 30 |
| Hydrolysis resistance time [hr] | | 96 | 192 | 192 | - | 192 | 192 | 200 | 200 |
| Soil on mold | | - | C | - | - | - | C | B | D |

As is clear from the results shown in Tables 1 to 4, it was noted that according to the resin additive of the present invention, when a carbodiimide compound was used as an additive for improving the hydrolysis resistance of a resin, the generation of an isocyanate gas during the production of a resin composition was effectively suppressed. In addition, it was also confirmed that hydrolysis resistance provided by the carbodiimide compound was hardly influenced by the use of the above resin additive. Further, it was confirmed that soil on a mold when the produced resin composition was injection-molded tended to be suppressed as the generation of an isocyanate gas was suppressed.

In addition, it was noted that the generation of an isocyanate gas was also effectively suppressed during the production of a master batch (Examples 6, 19, 26, and 31).

**Claims**

1. A resin additive comprising a carbodiimide compound (A) and a surfactant (B).

2. The resin additive according to claim 1, further comprising a heterocyclic amine compound (C).

3. The resin additive according to claim 1 or 2, wherein the surfactant (B) is a cationic surfactant or an amphoteric surfactant.

4. The resin additive according to any one of claims 1 to 3, wherein the surfactant (B) has a vaporization temperature of 100 to 300°C and a decomposition temperature of higher than 300°C.

5. The resin additive according to claim 3 or 4, wherein the cationic surfactant is at least any one of a quaternary ammonium salt type, an alkylamine salt type, and an alkylpyridinium salt type.

6. The resin additive according to claim 3 or 4, wherein the amphoteric surfactant is at least any one of an alkyl betaine type, a fatty acid amidopropyl betaine type, and an alkylaminodicarboxylic acid type.

7. The resin additive according to any one of claims 2 to 6, wherein the heterocyclic amine compound (C) has a vaporization temperature of 100 to 300°C and a decomposition temperature of higher than 300°C.

8. The resin additive according to any one of claims 2 to 7, wherein the heterocyclic amine compound (C) is at least any one of pyrazole, dimethylpyrazole, and imidazole.

9. The resin additive according to any one of claims 1 to 8, wherein the carbodiimide compound (A) is at least any one of an aromatic monocarbodiimide, an aromatic polycarbodiimide, an aliphatic monocarbodiimide, and an aliphatic polycarbodiimide.

10. The resin additive according to any one of claims 1 to 9, wherein an amount of the surfactant (B) is 0.1 to 50 parts by mass based on 100 parts by mass of the carbodiimide compound (A).

11. The resin additive according to any one of claims 2 to 10, wherein a total amount of the surfactant (B) and the heterocyclic amine compound (C) is 0.1 to 50 parts by mass based on 100 parts by mass of the carbodiimide compound (A).

12. A master batch comprising the resin additive according to any one of claims 1 to 11 and a resin (D).

13. The master batch according to claim 12, wherein a content of the carbodiimide compound (A) is 0.5 to 30 parts by mass based on 100 parts by mass of the resin (D).

14. The master batch according to claim 12 or 13, wherein the resin (D) is at least any one of a polyester resin and a polyamide resin.

15. A method for producing the master batch according to any one of claims 12 to 14, comprising melting and kneading the resin additive according to any one of claims 1 to 11 and the resin (D).

16. A resin composition comprising a resin (D) and the resin additive according to any one of claims 1 to 11.

17. A resin composition comprising the resin (D) and the master batch according to any one of claims 12 to 14.

18. The resin composition according to claim 16 or 17, wherein a content of the carbodiimide compound (A) is 0.1 to 10 parts by mass based on 100 parts by mass of the resin (D).

19. The resin composition according to any one of claims 16 to 18, wherein the resin (D) is at least any one of a polyester resin and a polyamide resin.

20. A method for producing a resin composition, comprising melting and kneading the resin additive according to any one of claims 1 to 11 and a resin (D).

21. A method for producing a resin composition, comprising melting and kneading the master batch according to any one of claims 12 to 14 and the resin (D).

22. The method for producing a resin composition according to claim 20 or 21, wherein the resin (D) is at least any one of a polyester resin and a polyamide resin.

## INTERNATIONAL SEARCH REPORT

International application No.

PCT/JP2016/079075

| A. CLASSIFICATION OF SUBJECT MATTER |
|---|
| $C08K5/29$(2006.01)i, $C08J3/22$(2006.01)i, $C08K5/34$(2006.01)i, $C08K5/3445$ (2006.01)i, $C08L67/00$(2006.01)i, $C08L77/00$(2006.01)i |

According to International Patent Classification (IPC) or to both national classification and IPC

| B. FIELDS SEARCHED |
|---|
| Minimum documentation searched (classification system followed by classification symbols) |
| $C08L1/00$-101/14, $C08K3/00$-13/08, $C08J3/22$ |

Documentation searched other than minimum documentation to the extent that such documents are included in the fields searched

| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2011-052217 A (Rhein Chemie Rheinau GmbH), 17 March 2011 (17.03.2011), | 12-13,15-18, 20-21 |
| A | claims; paragraphs [0075] to [0076], [0083] to [0084], [0093] to [0094] & US 2011/0183875 A1 paragraphs [0094] to [0095], [0101], [0108] & EP 2292687 A1 | 1-11,14,19, 22 |
| A | JP 2014-156553 A (Fujifilm Corp.), 28 August 2014 (28.08.2014), claims (Family: none) | 1-22 |

[×] Further documents are listed in the continuation of Box C.        [ ] See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 01 December 2016 (01.12.16) | 13 December 2016 (13.12.16) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

**INTERNATIONAL SEARCH REPORT**

International application No.

PCT/JP2016/079075

C (Continuation).　DOCUMENTS CONSIDERED TO BE RELEVANT

| Category* | Citation of document, with indication, where appropriate, of the relevant passages | Relevant to claim No. |
|---|---|---|
| A | JP 2014-139284 A　(Nisshinbo Chemical Inc.),<br>31 July 2014 (31.07.2014),<br>claims<br>& US 2015/0353708 A1<br>claims<br>& WO 2014/112650 A1　　& EP 2947119 A1<br>& CN 104937028 A　　& KR 10-2015-0108368 A | 1-22 |
| A | JP 2009-108149 A　(Mitsubishi Engineering-<br>Plastics Corp.),<br>21 May 2009 (21.05.2009),<br>claims<br>(Family: none) | 1-22 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008010355 A
- WO 2010071213 A
- JP 2014139284 A